# EUROPÄISCHE PATENTSCHRIFT

(11) **EP 4 224 140 B1**
(45) Veröffentlichungstag und Bekanntmachung des Hinweises auf die Patenterteilung: **10.09.2025**
(21) Anmeldenummer: 23160087.5
(22) Anmeldetag: 03.05.2022
(51) Int. Cl.: G01N 3/32

(54) **MATERIALANALYSEGERÄT MIT SCHNELLBEFESTIGUNG**
QUICK-FASTENING MATERIAL ANALYZER
ANALYSEUR DE MATÉRIAU À FIXATION RAPIDE

(30) Priorität: 05.05.2021 DE 102021111641
(43) Veröffentlichungstag der Anmeldung: 09.08.2023
(62) Teilanmeldung aus: 22171340.7
(73) Patentinhaber: Netzsch-Gerätebau GmbH, 95100 Selb (DE)
(72) Erfinder: Neumann, Georg, 95173 Schönwald (DE); Zier, Marco, 95686 Fichtelberg (DE); Biermann, Patrick, 30926 Seelze (DE); Tschöpel, Jürgen, 95659 Arzberg (DE); Wurpts, Wiebold, 29690 Schwarmstadt (DE); Hilmer, Markus, 31275 Lehrte (DE); Faulhammer, Leonhard, 95100 Selb (DE); Lauer, Stephan, 30900 Wedemark (DE); Dinges, Kai, 29690 Grethem (DE); Luhmann, Claas, 30916 Isternhager (DE); Bellmann, Michel, 30900 Wedemark (DE); Storch, Georg, 95100 Selb (DE); Gschwendtner, Reinhard, 95615 Marktredwitz (DE)
(74) Vertreter: Misselhorn, Hein-Martin

(56) Entgegenhaltungen:
- NETZSCH: "Analyzing & Testing Dynamic Mechanical Analysis - DMA 242 E Artemis", 1 February 2020 (2020-02-01), pages 1 - 24, XP055966717, Retrieved from the Internet <URL:https://www.nexus-analytics.com.my/wp-content/uploads/2020/11/Brochure_DMA_242_E_Artemis.pdf> [retrieved on 20220930]

## Beschreibung

Die Erfindung betrifft ein Materialanalysegerät nach dem Oberbegriff des Anspruchs 1 mit einer Schnellbefestigung für den Probenhalter.

### TECHNISCHER HINTERGRUND

Geräte wie das erfindungsgemäße kommen nicht nur, aber bevorzugt für die dynamisch-mechanische Analyse zum Einsatz. Die dynamisch-mechanische Analyse DMA ist eine unentbehrliche Methode zur Bestimmung der viskoelastischen Eigenschaften von hauptsächlich polymeren Werkstoffen. Hier sind Materialanalysegeräte gefragt, die ein modulares Design besitzen. Dieses modulare Design soll es insbesondere auch ermöglichen, das Gerät mit einer Vielzahl unterschiedlicher Probenhalter und unterschiedlicher Fühlstempel zu betreiben.

So gelingt es, mit einem Gerät nahezu alle denkbaren Lastfälle zu simulieren. Bisher werden diese Probenhalter und die zugehörigen Fühlstempel jeweils in das Materialanalysegerät eingeschraubt. Schraubverbindungen sind sicher, können zuverlässig die nötigen Kräfte übertragen und lassen sich auch schnell herstellen und wieder lösen.

Die Publikation Netzsch, "Analyzing & Testing Dynamic Mechanical Analysis - DMA 242 E Artemis", 1. Februar 2020(20200201), Seiten 1-24, XP055966717, Gefunden im Internet: URL: https://www.nexus-analytics.com.my/wpcontent/uploads/2020/11/Brochure_DMA_242_E_Artemis.pdf, [gefunden am 2022-09-30] beschreibt ein Materialanalysegerät zur Bestimmung der viskoelastischen Eigenschaften von hauptsächlich Polymermaterialien.

### DIE DER ERFINDUNG ZUGRUNDE LIEGENDE AUFGABE

Obwohl die bisher bekannten Materialanalysegeräte gut und zuverlässig funktionieren und sich auch relativ gut umrüsten lassen, ist eine weitere Verkürzung der Rüstzeiten für ein solches Materialanalysegerät wünschenswert.

Die Lösung der genannten Aufgabe erfolgt mit den Merkmalen des Anspruchs 1 in ihrer Gesamtheit.

Demnach wird ein Materialanalysegerät zu Analyse einer Werkstoffprobe vorgeschlagen, das bevorzugt mit einer von ihrer Oberseite her beladbaren, und im letztgenannten Fall durch einen Deckel verschließbaren, zumeist temperierbaren Probenkammer ausgestattet ist. Es besitzt einen mittels ein, zwei oder mehr Säulen in Position gehaltenen Probenhalter, vorzugsweise ist der Probenhalter mittels Säulen am Deckel aufgehängt. Dabei kommen zur Positionierung des Probenhalters oft zwei oder besser sogar mehrere Säulen zum Einsatz, die den Probenhalter tragen. Im bevorzugten Fall der Beladbarkeit von oben her lassen die Säulen den Probenhalter vom Deckel herab in die Probenkammer hineinragen.

Darüber hinaus verfügt das Materialanalysegerät über einen Belastungsstempel. Dieser wird an seinem einen Ende von einem Erreger mit Kraft beaufschlagt. An seinem anderen Ende trägt der Belastungsstempel einen Fühlstempel, den der Praktiker vielfach auch als "an die Probengeometrie angepassten Einsatz" bezeichnet, wobei im Folgenden aus Gründen der Einheitlichkeit der patentrechtliche Begriff "Fühlstempel" beibehalten wird. Mit diesem überträgt er in definierter Art und Weise Kraft auf die Probe. Hierdurch belastet er diese.

Erfindungsgemäß zeichnet sich das Materialanalysegerät dadurch aus, dass der Belastungsstempel an seinem der Probenkammer zugewandten Ende eine Muffe ausbildet. Diese Muffe nimmt in betriebsfertigem Zustand einen Einsteckabschnitt des Fühlstempels in sich auf. Dabei besitzt diese Muffe zumindest ein seitliches Fenster. Durch dieses seitliche Fenster hindurch kann ein Keil, vorzugsweise in Gestalt eines Flachkeils mit einer ebenen Keilfläche, in die dahinter liegende Nut am Einsteckabschnitt eingeschoben werden. Der Keileinschub erfolgt typischerweise in rein radialer Richtung, bezogen auf die Längsachse des Fühlstempels.

Auf diese Art und Weise kann der Fühlstempel formschlüssig spielfrei am Belastungsstempel verankert werden. Diese Keilverbindung hat den großen Vorteil, dass sie sich schnell lösen und herstellen lässt, im Regelfall werkzeuglos. Bei geeigneter, zwangsweiser Vorspannung wird sie zudem immer von alleine korrekt hergestellt. Damit wird nicht nur die Rüstzeit verkürzt, sondern gegebenenfalls auch die Betriebssicherheit vergrößert. Denn es gibt keine Probleme mehr mit versehentlich nicht korrekt angezogenen Schraubverbindungen. Es besteht auch keine oder - verglichen mit einer Schraubverbindung - nur eine geringere Gefahr, dass sich die Keilverbindung ungewollt löst.

### OPTIONALE AUSGESTALTUNGSMÖGLICHKEITEN DER ERFINDUNG

Idealerweise bildet die Muffe des Belastungsstempels einen ersten Zentrierkegel aus, vorzugsweise in Gestalt eines Zentrierkegelsitzes. Dieser zentriert im Zusammenspiel mit einem zweiten, vorzugsweise männlichen Zentrierkegel, der am Einsteckabschnitt des Fühlstempels ausgebildet ist, letzteren gegenüber dem Belastungsstempel. Zu diesem Zweck ist der Keil vorzugsweise so gestaltet, positioniert und vorgespannt, dass er die beiden Zentrierkegel ineinander zieht, die, bevorzugt in Richtung des Probenraums gesehen, unterhalb von ihm angebracht sind. Auf diese Art und Weise sorgt die erfindungsgemäße Schnellbefestigung zwangsweise für eine optimale Zentrierung.

Besonders günstig ist es, wenn an der Außenseite des Belastungsstempels eine Biegefeder befestigt ist. Diese Biegefeder spannt den Keil in radialer Richtung hin zum Belastungsstempel vor. Die Biegefeder ist bevorzugt nach Art einer an nur einem ihrer Enden festgelegten Blattfeder ausgestaltet.

Dabei ist der Keil an seinem auswärtigen Ende vorzugsweise derart mit der Blattfeder verbunden, dass diese auch Zugkräfte auf ihn übertragen kann. Dadurch wird die Blattfeder zum universellen Betätigungsorgan für den Keil, in beide Richtungen. Durch ihre naturgemäß nicht unbeträchtliche Größe ermöglicht sie auch ein leichtes Wiederlösen des Keils. Insbesondere kann die Blattfeder gut motorisch betätigt werden und zwar in der überwiegenden Zahl der Fälle, ohne dass dazu ein zusätzlicher Motor erforderlich ist.

Zu letzterem Zweck ist es besonders günstig, wenn die Blattfeder ein verlängertes, vorzugsweise radial schräg nach außen gekröpftes freies Ende aufweist, das in Richtung der Längsachse des Belastungsstempels über den Keil hinausragt. Man kann dieses verlängerte Ende, dem letztendlich selbst eine Keilwirkung zukommt, dazu benutzen, um es beim immer weiter Einfahren des Belastungsstempels in den Probenraum gegen einen Anschlag anlaufen zu lassen. Der Anschlag ist dann so gestaltetet und positioniert, dass die Belastungsfeder an dem Anschlag hängenbleibt und beim Weitereinfahren nach außen gespreizt wird.

Sie zieht den Keil dann derart aus der Nut heraus, dass der Fühlstempel vom Belastungsstempel abgenommen werden kann.

### EINE WEITERE ERFINDUNGSGEMÄSSE LÖSUNG

Zusammen mit den bisher geschilderten Anspruchsmerkmalen, aber auch alleine, unabhängig nur mit den Merkmalen nach dem Oberbegriff des Anspruchs 1, wird auch Schutz für ein Materialanalysegerät beansprucht, dessen Probekammerwand bzw. Deckel für mehrere Säulen des Probenhalters jeweils eine Halteöffnung aufweist. In diese Halteöffnung kann das freie Ende der jeweiligen Säule eingeschoben werden. Dabei trägt das freie Ende der betreffenden Säule eine Nut. In diese kann ein beweglich im Deckel gelagerter Keil - vorzugsweise in rein radialer Richtung, bezogen auf die Längsachse der Säule - eingeschoben werden.

Auf diese Art und Weise kann das Ende der betreffenden Säule formschlüssig spielfrei an der Probekammerwand bzw. am Deckel verankert werden, im Regelfall werkzeuglos. Da auch diese Verankerung im Wesentlichen vom gleichen Typ ist, wie die für den Fühlstempel benutzte, hat auch sie die dort genannten Vorteile.

### WEITERE OPTIONALE AUSGESTALTUNGSMÖGLICHKEITEN DER ERFINDUNG

Besonders günstig ist es, wenn die Halteöffnung ganz oder teilweise als ein zum Probenraum hin - sprich also im Regelfall nach unten - offenes Sackloch ausgeführt ist. Die Ausführung dieses Sacklochs erfolgt dann im Regelfall derart, dass der im Deckel gelagerte Keil das freie Ende der ihm zugeordneten Säule zwischen seiner Keilfläche und dem Grund des Sacklochs verspannt. Anders als beim Fühlstempel kommt es hier im Regelfall nicht auf eine Zentrierung an. Daher kann die Verbindung einfacher ausgeführt werden als die für den Fühlstempel beschriebene.

Idealerweise ist in die Probekammerwand bzw. den Deckel eine Synchronbetätigungsmimik integriert. Diese ist so gestaltet, dass sie alle Keile der verschiedenen Säulen eines konkreten Probenhalters synchron betätigt, d. h. synchron in die Nuten der Säulen einschiebt oder aus ihnen herauszieht. Eine solche Synchronbetätigungsmimik führt zu einer ganz erheblichen Zeitersparnis beim Rüsten, verglichen mit dem bisherigen Zustand, bei dem mehrere Schraubverbindungen nacheinander gelöst werden müssen, um den jeweiligen Probenhalter ein- und auszubauen.

Bevorzugt weist die Synchronbetätigungsmimik einen Drehexzenter auf. Bei entsprechender Drehung übt dieser eine Druckkraft auf den mindestens einen ersten Keil aus, die diesen in eine Nut einer Säule zwängt. Gleichzeitig wird Zug auf einen Verschieberahmen ausgeübt. Wenn dieser hierdurch in eine andere Position gezogen wird, dann übt er seinerseits eine Druckkraft auf mindestens einen zweiten Keil aus. Die Druckkraft zwängt diesen in eine Nut einer anderen Säule. Bei entsprechender Drehung in entgegengesetzter Richtung gibt der Drehexzenter die besagten Keile frei, sodass diese sich wieder zurückbewegen können. Alternativ ist der Drehexzenter so mit den Keilen zwangsgekoppelt, dass er diese aktiv zurückzieht.

Besonders günstig ist es zu diesem Zweck, wenn die Keile nicht unmittelbar, sondern über Federelemente mit dem Exzenter und dem Verschieberahmen kommunizieren. Besonders günstige Federelemente sind hierbei Biegestabfedern. Denn über solche Biegestabfedern kann besonders gut nicht nur eine Druckkraft, sondern auch eine Zugkraft auf die Keile ausgeübt werden, im Sinne einer echten Zwangsbetätigung. Das führt zu einem besonders problemlosen Lösen.

### FIGURENLISTE

Die Figur 1 zeigt das erfindungsgemäße Materialanalysegerät im betriebsfertigen Zustand und gibt einen Überblick.
Die Figur 2 zeigt das erfindungsgemäße Materialanalysegerät im betriebsfertigen Zustand von der Seite, aus einer gegenüber der Figur 1 um 90° gedrehten Betrachter-Position.
Die Figur 3 zeigt einen Detailausschnitt mit einem Ausführungsbeispiel, das gut sichtbar macht, wie der Fühlstempel erfindungsgemäß mit dem Belastungsstempel verbunden ist.
Die Figur 4 zeigt einen Überblick, auf welche Art und Weise der Fühlstempel gelöst werden kann.
Die Figur 4a zeigt mithilfe einer verkleinerten Abbildung den gelösten und in Trennung von dem Materialanalysegerät begriffenen Fühlstempel.
Die Figur 5 zeigt den Betätigungsmechanismus im Fühlstempel in betriebsbereiter Position.
Die Figur 6 zeigt den Betätigungsmechanismus für den Fühlstempel beim Lösen des Fühlstempels.
Die Figur 7 zeigt die erfindungsgemäße Befestigung der Säulen des Probenhalters am Deckel des Probenraums.
Die Figur 8 zeigt einen Ausschnitt aus der Figur 7.
Die Figur 9 zeigt die Befestigung gemäß Figur 7 im gelösten Zustand.
Die Figur 10 zeigt einen Ausschnitt aus der Figur 9.
Die Figur 11 zeigt ein Ausführungsbeispiel der erfindungsgemäßen Synchronbetätigungsmimik für die Säulen der Probenhalter.
Figur 12 zeigt ein Ausführungsbeispiel der erfindungsgemäßen Synchronbetätigungsmimik für die Säulen der Probenhalter, aber teilweise freigeschnitten, sodass man die Keile und deren Betätigung besser erkennen kann.

### AUSFÜHRUNGSBEISPIELE

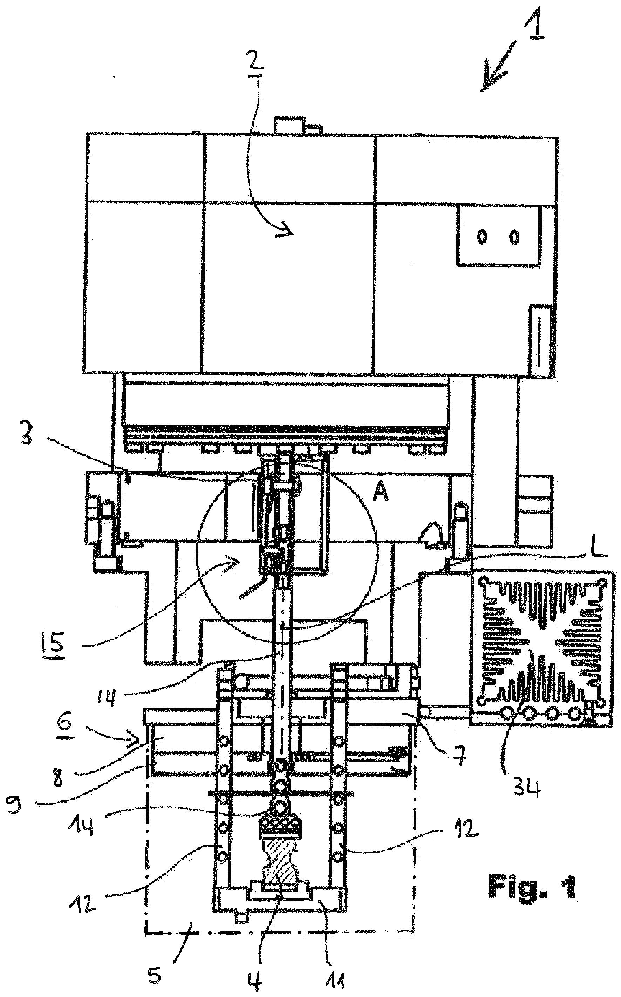

Die Figur 1 gibt einen guten Überblick über das erfindungsgemäße Materialanalysegerät 1.

Das Materialanalysegerät 1 umfasst einen Schwingungserreger 2. Der Schwingungserreger 2 beaufschlagt einen Belastungsstempel 3 mit Schwingungen. Diese Schwingungen überträgt dieser an eine Probe 4, die hier nur ganz allgemein zeichnerisch angedeutet ist.

Das Materialanalysegerät 1 umfasst darüber hinaus eine Probenkammer 5, die in Figur 1 nur angedeutet dargestellt ist. Diese Probenkammer 5 ist im Betrieb mittels eines Deckels 6 im Wesentlichen verschlossen. In der Probenkammer können die gewünschten Prüftemperaturen hergestellt werden. Optional ist es zusätzlich möglich, Strahlung auf dem Prüfling aufzubringen, etwa UV-Strahlung. Gegebenenfalls ist noch eine Benebelung oder eine Dampfbeaufschlagung mit beispielsweise korrosiv wirkenden oder das Kunststoffmaterial in sonstiger Form angreifenden bzw. beeinflussenden Flüssigkeiten möglich. Ähnliche Verhältnisse können optional auch mithilfe eines Eintauchens in ein entsprechendes Tauchbad realisiert werden.

Recht gut anhand der Fig. 1 ist auch zu erkennen, dass bei diesem Ausführungsbeispiel ein Bereich außerhalb der Probenkammer zwischen Probenkammer und dem Messsystem selbsttätig durch ein auf Wärmerohrtechnologie basierendes Kühlsystem gekühlt wird. Zu diesem Zweck liegt oberhalb der Isolation 8 und damit zwischen der Probenkammer und dem Messsystem eine Trägerplatte 7, die vorzugsweise als Kühlplatte ausgestaltet ist. Die Trägerplatte 7 kann, wie hier zeichnerisch dargestellt, eine Lage des mehrlagigen Deckels 6 sein, sie kann aber auch völlig unabhängig vom Deckel 6 sein, was hier nicht figürlich dargestellt ist.

Die Kühlplatte 7 beseitigt oder reduziert die Belastung des hier oberhalb der Probenkammer liegenden Messsystems durch Wärme aus der Probenkammer. Die Kühlplatte 7 wird vorzugsweise von fluidischem Kühlmittel durchströmt, das über ein Kühlgerät 34 rückgekühlt wird. Die Kühlplatte 7 kann aber auch nach Art einer "Heatpipe" funktionieren, wie sie beim Laptopbau eingesetzt wird.

Besonders günstig ist es, die Kühlung so zu realisieren, dass die Kühlplatte 7 mit einer meist radialen Bohrung versehen wird. In diese Bohrung wird eine rohrförmige Heatpipe eingesetzt, meist unter Verwendung einer Wärmeleitpaste, um einen optimalen Wärmeübergang herzustellen. Die verwendete Heatpipe ist länger als die sie in der Kühlplatte aufnehmende Bohrung. Sie ragt also seitlich aus der Kühlplatte 7 heraus. Wie man zum Beispiel recht gut anhand der Fig. 1 sehen kann, reicht der seitlich aus der Kühlplatte 7 herausragende Teil bis in das Kühlgerät 34 hinein. Er wird dort von einer Nut oder Bohrung in einem typischerweise verrippten Kühlkörper aufgenommen, der seinerseits als Wärmesenke dient und typischerweise von einem Gebläse mit Kühlluft bestrichen wird.

Eine solche "Heatpipe" bzw. ein Wärmerohr der hier verwendeten Art ist typischerweise hermetisch dicht und nicht zerstörungsfrei öffenbar.

Das Wärmerohr ist typischerweise so gestaltet, dass in ihm allein durch Temperaturdifferenz getrieben, eventuell durch eine Kapillarwirkung unterstützt, ein Fluid umläuft, das Wärme an einem Ende des Wärmerohrs aufnimmt, zum anderen Ende des Wärmerohrs transportiert und dann dort nach außen abgibt.

Geht man zu dem erfindungsgemäß verwendeten Wärmerohr noch etwas genauer ins Detail, dann lässt sich zu den bevorzugt zu verwendenden Wärmerohren Folgendes sagen:
Die Kühlplatte 7 führt unvermeidlich einen gewissen Wärmestrom, nämlich der Verlustwärme, die die Isolation 8 überwinden konnte. Der Wärmeeintrag im Bereich der Kühlplatte erhöht die Temperatur des das Wärmerohr bildenden Gefäßes, typischerweise ein Kupferrohr, und des darin befindlichen Arbeitsmediums so lange, bis der Siedepunkt des Arbeitsmediums erreicht ist. Das Arbeitsmedium beginnt nun zu verdampfen. Die Temperatur steigt nicht mehr, die gesamte weiter zugeführte Energie wird stattdessen in Verdampfungswärme umgesetzt.

Dadurch wird über dem Flüssigkeitsspiegel der Druck im Wärmerohr lokal erhöht, was zu einem geringen Druckgefälle innerhalb des Wärmerohrs führt. Der entstandene Dampf beginnt, sich im gesamten verfügbaren Volumen zu verteilen, d. h. er strömt überall dahin, wo der Druck niedriger ist; an den Stellen, wo seine Temperatur den Siedepunkt des Arbeitsmediums unterschreitet, kondensiert er. Dazu muss der Dampf Energie an das Gefäß und das Gefäß an die Umgebung abgeben. Am stärksten geschieht dies an der Stelle, wo der Kondensator liegt, in dem aktiv gekühlt werden kann, also im Bereich des Kühlgeräts 34.

Die Temperatur sinkt nun nicht mehr, bis die gesamte enthaltene Latentwärme, die Kondensationswärme, an die Umgebung abgegeben worden ist.

Der jeweils flüssige Anteil des Arbeitsmediums kehrt durch die Kapillarkräfte zum Verdampfer zurück, die das typischerweise in dem hier als Wärmerohr verwendeten Rohr eingebaute Metallgeflecht entwickelt. Alternativ kann auch ein Rohr als Wärmerohr verwendet werden, dessen Innenseite nicht glattflächig ist, sondern mit in Richtung der Rohrlängsachse verlaufenden Rippen versehenen ist, die zwischen sich Freiräume einschließen, die man als Kapillarnuten betrachten kann.

Vorzugsweise ist die Isolation 8 eine hochtemperaturbeständige Platte aus anorganischem Material, meist auf der Basis von disperser, amorpher Kieselsäure. Oft wird diese Platte auch spezielle Infrarot-Trübungsmittel aufweisen, sodass auch in der Probenkammer 5 anfallende Infrarotstrahlung die Isolation nicht ohne weiteres überwinden kann. Auf der einen Seite der Isolation 8, in der Probenkammer, ist meist eine sogenannte Deckelheizung 9 angeordnet, die der Temperierung der Probenkammer dient.

Die Probe wird in der Probenkammer 5 mithilfe eines Probenhalters 10 in Position gehalten. Der Probenhalter 10 besteht meist aus einer Art Probentisch bzw. einem Probenquerträger 11. Dieser ist seinerseits mithilfe von Säulen 12 in Position gehalten. Zu diesem Zweck ist auf der Außenseite des Deckels eine Säulenverankerung 13 angeordnet. Diese umfasst vorzugsweise eine Synchronbetätigungsmimik, wie sie später noch näher beschrieben wird. Die Säulen ragen durch ihnen zugeordnete Durchgangsöffnungen im Deckel durch diesen hindurch, bis in den Bereich der Säulenverankerung 13 hinein.

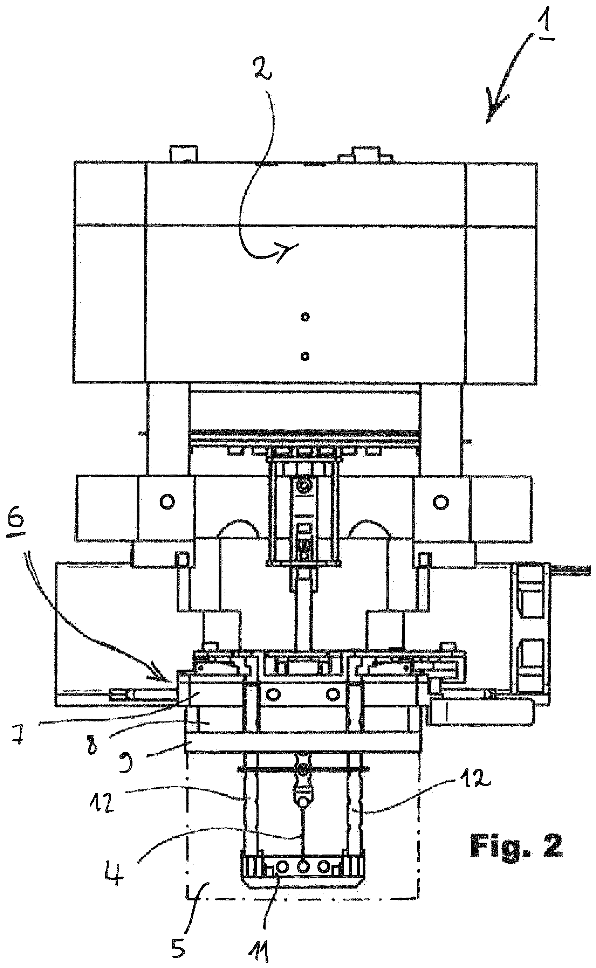

Gut zu erkennen ist auch, dass der Belastungsstempel 3 die ihm von dem Schwingungserreger 2 mitgeteilten Schwingungen nicht unmittelbar auf die Probe aufbringt, sondern über einen an ihn angekoppelten Fühlstempel 14. Die Kupplung, die hier den Belastungsstempel mit dem Fühlstempel 14 koppelt, trägt die Bezugsziffer 15. Die Kupplung 15 ist in den Fig. 1 und 2 nur grob zu erkennen und wird später noch näher erläutert. Der Fühlstempel 14 ragt durch eine ihm zugeordnete Durchgangsöffnung des Deckels durch diesen hindurch bis in den Bereich der Probenkammer 5 hinein.

Bemerkenswert ist, dass der Fühlstempel 14 vorzugsweise zumindest in dem Bereich, mit dem er in die Probenkammer 5 hineinragt, hohl gebohrt ist. Typischerweise weist er auch zusätzlich eine Anzahl radialer Fenster auf. Auf diese Art und Weise wird der für die Wärmeleitung am Fühlstempel 14 zur Verfügung stehende Querschnitt gering gehalten, über den Wärme aus dem Probenraum entlang des Fühlstempels bis in einen Bereich außerhalb des Probenraums abfließen kann.

Ähnlich im Hinblick auf ihre verminderte Wärmeleitfähigkeit sind vorzugsweise auch die Säulen 12 ausgebildet, die den Probentisch bzw. Probenquerträger 11 halten. Dies hat den gleichen Grund, wie für den Fühlstempel geschildert.

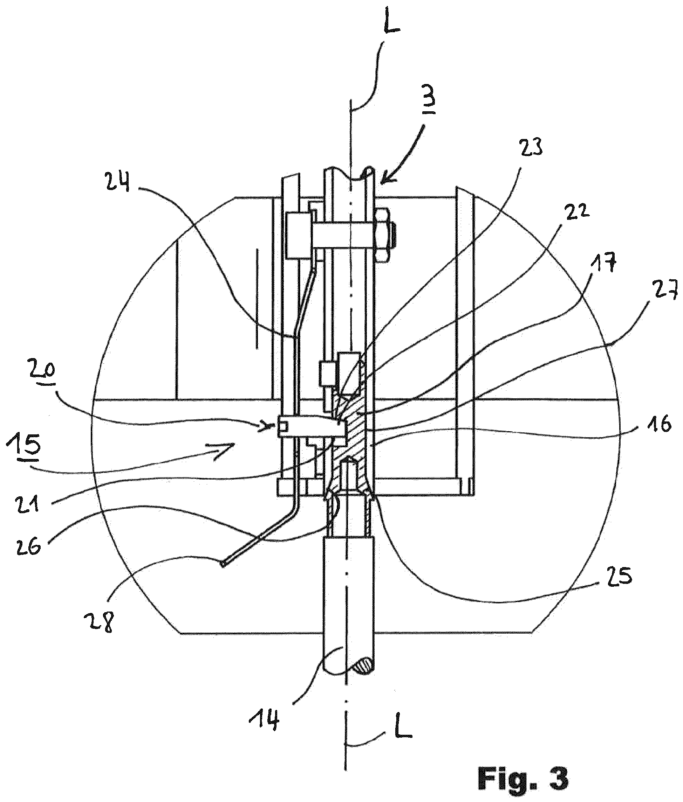

Die Figur 3 zeigt die Kupplung 15 und stellt damit im Einzelnen dar, wie der Fühlstempel 14 an den Belastungsstempel 3 angekoppelt ist.

Gut zu erkennen ist der hier zumindest an seinem dem Fühlstempel zugewandten Ende innen hohle Belastungsstempel 3. Dieses hohle Ende bildet eine Muffe 16 aus. Im vorliegenden Fall trägt der Fühlstempel 14 an seinem Ende ein in diesem Fall männliches Kupplungsstück 17. Diese Gestaltung ist besonders zweckmäßig, weil dann der Keil zum Abkuppeln nicht vollständig aus dem ihm zugeordneten Fenster herausgezogen werden muss.

Zweckmäßigerweise ist das Kupplungsstück 17 auf den Fühlstempel 14 aufgeschraubt. Anders als der Fühlstempel 14, wird das Kupplungsstück 17 im Regelfall massiv sein. Das Kupplungsstück 17 wird zum Ankuppeln in die Muffe 16 des Belastungsstempels 3 eingeschoben. Wie man sieht, besitzt das Kupplungsstück 17 eine radial von der Seite her zugängliche Nut 18. In vollständig angekoppeltem Zustand kommt die Nut 18 hinter einem Fenster 19 in der Muffe 16 zu liegen. Durch das Fenster hindurch wird ein Keil 20 eingeschoben.

Der Keil 20 kann als Rundkeil oder, was klar bevorzugt ist, als Flachkeil ausgeführt werden.

Der Flachkeil ist hier figürlich dargestellt. Der Flachkeil besitzt hier eine plane, rein radial ausgerichtete untere Gleitfläche 21. Dieser gegenüberliegend besitzt er eine meist ebenfalls plane, schräg verlaufende Keilfläche 22. Die Keilfläche 22 interagiert mit einer Gegenkeilfläche 23 am Kupplungsstück 17.

Der Keil 20 wird durch ein Federelement, das hier vorzugsweise durch die Blattfeder 24 gebildet wird, in radialer Richtung zum Kupplungsstück 17 hin vorgespannt. Das bedeutet, dass die Blattfeder 24 den Keil 20 in die Nut 18 hineinzwängt. Durch das Aufeinander-Abgleiten der Keilfläche 22 des Keils 20 und der Gegenkeilfläche 23 des Kupplungsstücks einerseits und andererseits der Abstützung des Keils 20 mit seiner unteren Gleitfläche 21 an dem Rand des Fensters 19 wird das Kupplungsstück 17 tendenziell tiefer in die Muffe 16 des Belastungsstempels hineingezogen. Dadurch kommt es zur automatischen Zentrierung. Denn der Außenkegel 25 des Kupplungsstücks 17 wird hierdurch in den Kegelsitz 26 ganz am Ende der Muffe 16 des Belastungsstempels 3 eingezogen. Auf diese Art und Weise wird das, wenngleich meist geringe, Spiel unschädlich gemacht, das der zylindrische Schaft 27 des Kupplungsstücks 17 naturgemäß gegenüber der Innenoberfläche der Muffe 16 haben muss. Gut zu erkennen ist auch, dass diese Art der Kupplung den Belastungsstempel 3 dazu ertüchtigt, sowohl in die eine Richtung entlang seiner Längsachse L als auch in die entgegengesetzte Richtung verlustfrei Schwingungen auf den Fühlstempel 14 zu übertragen.

Gut zu erkennen ist auch, dass der Keil 20 im Bereich seines radial auswärtigen Endes formschlüssig an der Blattfeder 24 festgelegt ist. Zu diesem Zweck kann die Blattfeder 24 ein Fenster aufweisen. Durch dieses Fenster ragt der Keil hindurch. Die Blattfeder 24 zeichnet sich hier, wie man sieht, dadurch aus, dass nur ihr eines Ende eingespannt ist. Vorzugsweise dient zur Einspannung ihres Endes eine Art Rohrschelle 28. Diese greift örtlich um den Belastungsstempel 3 herum und hält an einer Seite das besagte Ende der Blattfeder 24 unbeweglich fest. Das gegenüberliegende Ende der Blattfeder 24 bildet vorzugsweise einen abgekröpften, jedenfalls relativ zur Längsachse L des Belastungsstempels schräg verlaufenden Abschnitt 29. Seine Funktion wird gleich noch näher erläutert.

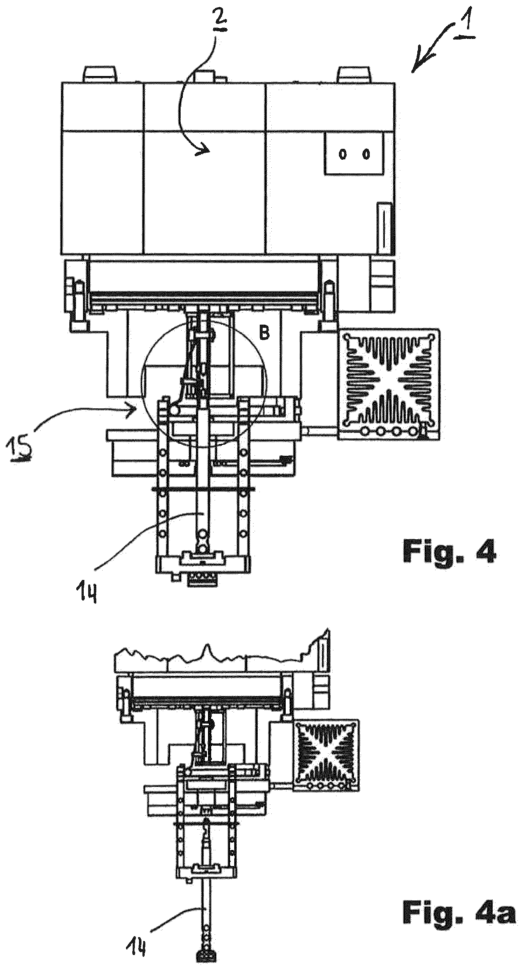

Die Figuren 4 und 4a zeigen, wenn man sie mit der Figur 1 vergleicht, recht anschaulich, auf welche Art und Weise der Belastungsstempel hier ferngesteuert motorisch gelöst werden kann. Die Figur 1 zeigt das Materialanalysegerät, wie erwähnt, in seinem betriebsbereiten Zustand. Der Schwingungserreger 2 kann anhand von nicht mehr zu erkennenden vertikalen Führungen auf und ab gefahren werden, motorisch, meist fernbedient. Diese Verfahrbarkeit dient eigentlich dazu, das Ende des Fühlstempels genau so positionieren zu können, dass es präzise an die Probe 4 angekuppelt werden kann. Diese Verfahrbarkeit wird hier nun aber erfindungsgemäß "zweckentfremdet" bzw. einem Zweitnutzen unterworfen. Wie man gut anhand der Figuren 4 und 4a nachvollziehen kann, wird der Schwingungserreger 2 zum Lösen der Kupplung 15 nach unten gefahren. Dabei läuft der schräg verlaufende Abschnitt 29 der Blattfeder irgendwann auf einen Anschlag 30 auf. Im Zuge des weiteren Nach-Unten-Fahrens des Schwingungserregers wird der schräg verlaufende Abschnitt 29 gerade wegen seiner keilartig wirkenden Schräge nach außen gebogen. Das bedeutet, dass die Blattfeder - hier im Uhrzeigersinn - geschwenkt wird. Sie zieht dabei den Keil 20 aus der Nut 18 heraus. Auf diese Art und Weise wird der Fühlstempel 14 entriegelt. Er kann nun aus dem Belastungsstempel 3 herausgezogen werden, so wie das die Figur 4a abbildet.

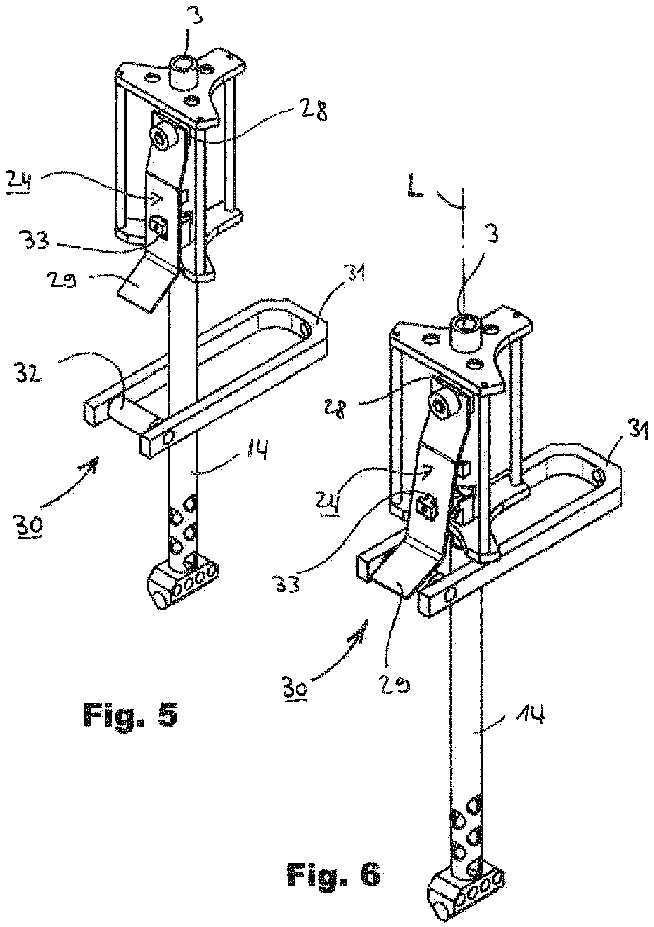

Die genaueren Einzelheiten zeigen die Figuren 5 und 6. Hier ist die an ihrem oberen Ende bevorzugt durch die Rohrschelle 28 eingespannt gehaltene Blattfeder 24 sehr gut zu erkennen. Der Anschlag 30 wird hier günstiger Weise durch den ortsfest am Materialanalysegerät montierten Haltebügel 31 gebildet, der eine Rolle 32 trägt.

Die Figur 5 zeigt das Ganze in der betriebsbereiten Position. Die Figur 6 zeigt das Ganze, nachdem der Schwingungserreger 2 weit genug heruntergefahren worden ist. Wie man sieht, rollt der schräg verlaufende Abschnitt 29 der Blattfeder 24 nun auf der Rolle 32 des Anschlags ab. Die Blattfeder 24 wird dadurch fast reibungslos nach außen gezogen.

Bemerkenswert ist noch, dass man an diesen Figuren auch die Verbindung zwischen dem Keil 20 und der Blattfeder 24 gut erkennen kann. Wie man hier sieht, trägt die Blattfeder 24 ein Fenster 33. Das Ende des Keils 20 ist formschlüssig an dem Fenster bzw. vorzugsweise zwischen zwei Laibungs-Seiten des Fensters festgelegt. Idealerweise wird der Keil zu diesem Zweck ein auf zwei gegenüberliegenden Seiten genutetes Ende aufweisen, wie man es in den Figuren 5 und 6 erkennt.

Bevorzugt ist der Querschnitt des Keils an seinem Ende nicht quadratisch, sondern rechteckig. Den gleichen rechteckigen Querschnitt bildet das Fenster 33 ab, aber um 90° gedreht. Auf diese Art und Weise kann der Keil bei der Montage so weit in das Fenster 33 eingeschoben werden, bis seine beiden genuteten Seiten auf der gleichen Höhe liegen wie die Leitung des Fensters 33. Dann wird der Keil 20 um 90° in seine Endposition gedreht Auf diese Art und Weise greifen nun zwei sich gegenüberliegende Laibungen des Fensters 33 in die beiden Nuten am Ende des Keils formschlüssig ein. Der Keil kann auf diese Art und Weise von der Blattfeder zwangsweise sowohl hin als auch her bewegt werden, senkrecht zur Längsachse L des Belastungsstempels. Natürlich sind noch andere Befestigungsarten denkbar, etwa eine Verschraubung des Keils mit der Blattfeder.

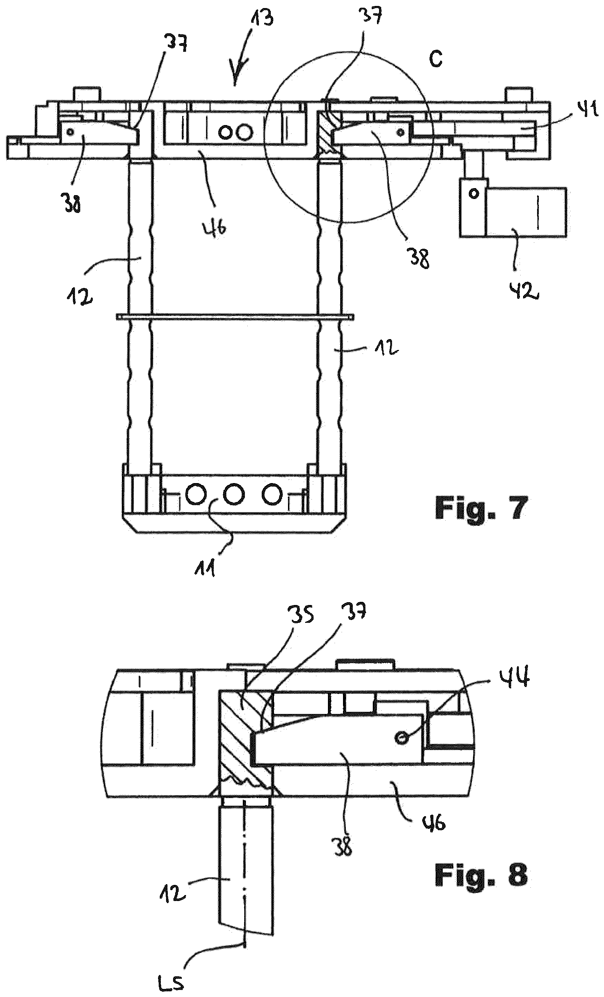

Wie die Säulen des Probenhalters am Deckel befestigt sind, sodass der Probenhalter von der Decke des Probenraums herab in den Probenraum hinein hängt, das zeigen am besten die Figuren 7 bis 12.

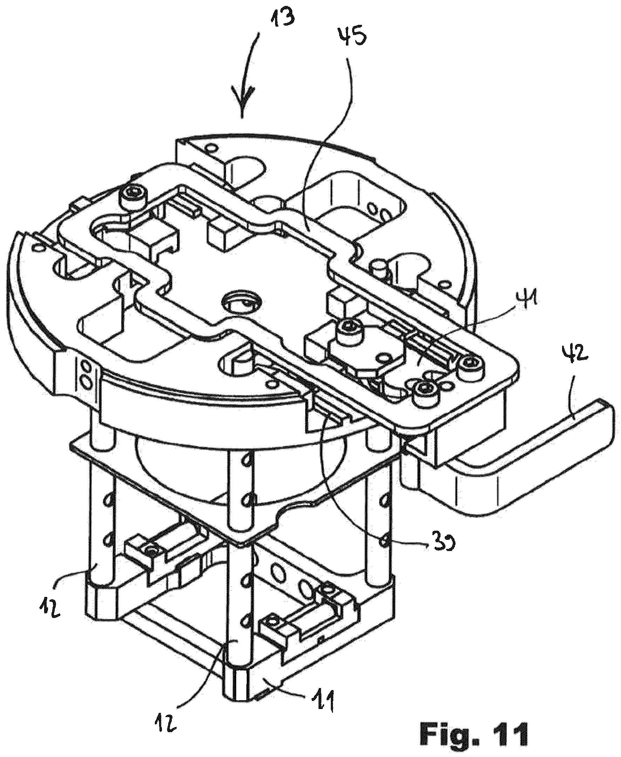

Die Figur 11 gibt einen Überblick über die Säulenverankerung 13, die ausweislich der Figur 1 den von der Probenkammer abgewandten äußersten Teil des Deckels 6 bildet. Die zu befestigenden Säulen ragen über Ausnehmungen im Deckel hindurch bis in den Bereich von dessen Außenseite, wo die Säulenverankerung angebracht ist. Das Ganze hat den Vorteil, dass die Säulenverankerung im Wesentlichen kalt, etwa auf Raumtemperatur, bleibt.

In dieser meist plattenartigen Säulenverankerung sind vollständig oder teilweise Sacklöcher vorgesehen. Von diesen Sacklöchern nimmt jeweils eines ein Kupplungsstück 35 der jeweiligen Säule 12 auf. Wie man sieht, wird unter dem Begriff Sackloch hier ein Loch verstanden, das einen Anschlag für die obere Stirnfläche des Kupplungsstücks 35 ausbildet. Das Kupplungsstück 35 trägt eine seitliche Nut 36. Die Nut 36 besitzt zumindest eine, dem Anschlag des Sacklochs zugewandte, eine Keilfläche 37 ausbildende Nutwange.

Das Kupplungsstück 35 wird festgesetzt, indem ein beweglicher Keil 38 eingeschoben wird. Es könnte ein Rundkeil sein. Ein Flachkeil, wie der hier figürlich dargestellte, ist aber deutlich zweckmäßiger. Mittels seiner bevorzugt oberseitigen Keilfläche, die mit der Keilfläche 37 an der Nutwange interagiert, wird das Kupplungsstück 35 zwischen dem Keil 38 und dem Anschlag des Sacklochs verspannt. Auf diese Art und Weise wird die betreffende Säule 12 in und entgegen der Richtung ihrer Längsachse LS immobilisiert. Bewegungen quer oder schräg zur Längsachse LS der Säule 12 verhindern die Umfangswände des Sacklochs. Der Keil 38 gleitet dabei auf seiner dem Probenraum zugewandten Seite auf einer Planfläche der Säulenverankerung 13. Er hat im Regelfall auch plane Seiten, an denen seine Seitenführung erfolgt.

Jeder Säule 12 ist individuell eine derartige Keilkupplung zugeordnet.

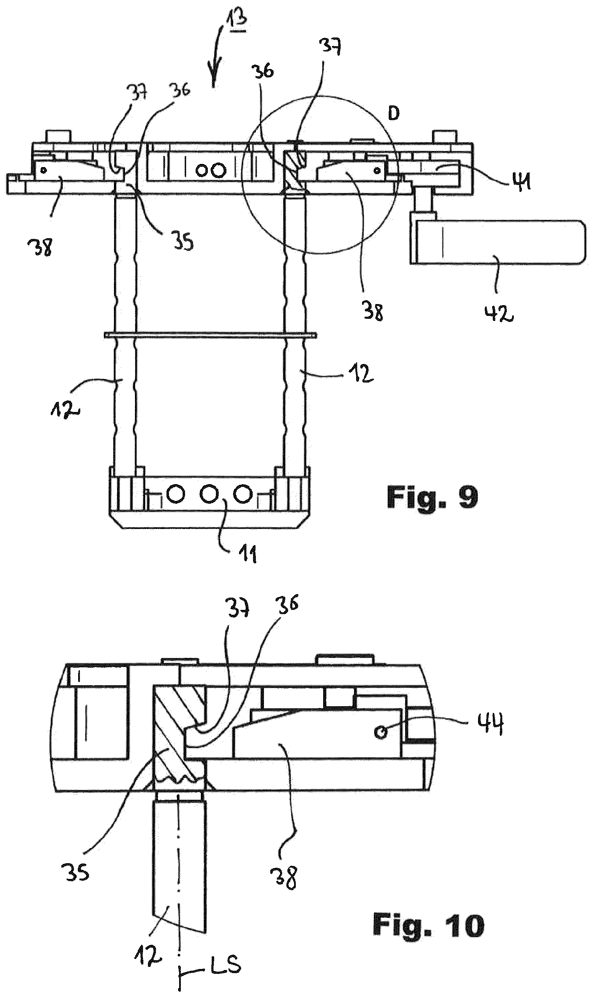

Eine optionale Besonderheit ist die, dass die vier bzw. mehreren Keile synchron betätigt werden. Hierzu ist eine Synchronbetätigungsmimik vorgesehen. Diese ist dazu in der Lage, die Keile so zurückzuziehen, wie in den Figuren 9 und 10 gezeigt. Die Keilspitze kommt dann völlig außer Eingriff mit der Nut 36.

Der Probentisch 11 kann dann mitsamt den Säulen 12 nach unten abgenommen werden.

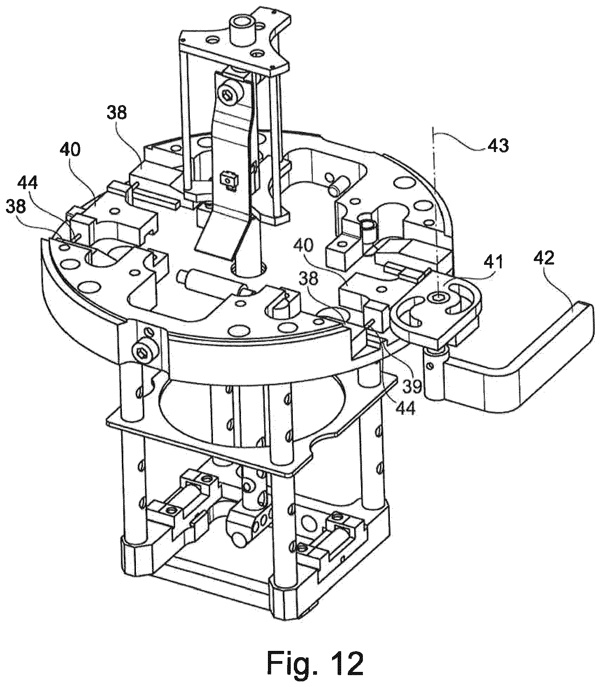

Den Aufbau der Synchronbetätigungsmimik, die hier Bestandteil der Säulenverankerung ist, zeigen am besten die Figuren 11 und 12.

Der Leser wendet sich des einfacheren Verständnisses halber bitte zuerst der Figur 12 zu.

Diverse Bauteile, die in Figur 11 noch zu sehen sind und die die Sicht auf die entscheidenden Dinge versperren, sind in Figur 12 weggeschnitten. Wie man sieht, laufen die Keile 38 hier in einer Nut bzw. einer begrenzten Vertiefung auf dem Teller 46 hin und her. Der Teller 46 ist hier Bestandteil der Säulenverankerung 13. Zu diesem Zweck sind, wie man relativ gut erkennen kann, bevorzugt seitliche Führungsleisten 39 neben jedem Keil vorgesehen. Jeweils zwei Keilen 38 ist ein gemeinsamer Betätigungsschieber 40 zugeordnet.

Bei genauem Hinsehen sieht man, dass jeder Keil über ein lang gestrecktes zylindrisches Element mit dem Betätigungsschieber 40 verbunden ist. Dabei endet das lang gestreckte zylindrische Element an einer der langen schmalen Seitenflächen des Keils. Das lang gestreckte zylindrische Element ist ein Federelement, vorzugsweise in Gestalt einer Biegestabfeder.

Zusätzlich ist in den Teller 46 ein Doppelexzenter 41 schwenkbar gelagert. Mithilfe seines Schwenkgriffs 42 kann der Doppelexzenter 41 um die Exzenterachse 43 gedreht werden. Sobald man den Schwenkgriff 42 zur Betätigung des Doppelexzenters 41 im Uhrzeigersinn dreht, drückt ein Exzenter - nämlich hier der dem Betrachter zugewandte Exzenter - des Doppelexzenters 41 auf den Betätigungsschieber 40. Der Betätigungsschieber 40 wird dadurch im vorliegenden Fall nach links gedrückt. Infolgedessen werden die jeweils über eine Biegestabfeder 44 mit dem Betätigungsschieber 40 verbundenen Keile 38 aus ihrer geöffneten Position in ihre Schließposition gedrückt.

Wenn man nun die Figuren 11 und 12 nebeneinander betrachtet, dann versteht man, wie die Synchronbetätigungsmimik funktioniert. Zu ihr gehört nämlich der Synchronbetätigungsrahmen 45. Gegen dessen hier rechtes Ende liegt der zweite Exzenter des Doppelexzenters 41 von innen her an. Die gleiche Bewegung des Doppelexzenters, die den einen ihm zugewandten Betätigungsschieber 40 im vorliegenden Fall nach links bewegt, führt dazu, dass der Synchronbetätigungsrahmen 45 vom zweiten Exzenter gezogen wird, im hier figürlich dargestellten Fall nach rechts. Diese ziehende Bewegung setzt sich über die gesamte Säulenverankerung 13 hinweg fort, bis in den Bereich von deren linken Betätigungsschieber 40. Dieser linke Betätigungsschieber 40 wird dann von dem Synchronbetätigungsrahmen von links nach rechts gezogen. Dabei schiebt er die mit ihm ebenfalls über Biegestabfedern verbundenen Keile 38 von ihrer geöffneten Position nach rechts in ihre geschlossene Position.

Auf diese Art und Weise kann der Wechsel eines Probentisches oder eines Probenquerträgers 11 einfach und handlich vonstattengehen. Nach dem Ausbau des Compartments, das die Probenkammer 5 abgrenzt, wird der Probentisch oder Probenquerträger 11 mit einer Hand gehalten, die andere Hand legt den Schwenkgriff 42 um 90° um. Daraufhin kann der Probentisch bzw. Probenquerträger 11 mit einer Hand nach unten entnommen werden.

### BEZUGSZEICHENLISTE

- 1: Materialanalysegerät
- 2: Schwingungserreger
- 3: Belastungsstempel
- 4: Probe
- 5: Probenkammer
- 6: Deckel
- 7: Kühlplatte
- 8: Isolation
- 9: Deckelheizung
- 10: Probenhalter
- 11: Probentisch/Probenquerträger
- 12: Säule zum Halten des Probenhalters
- 13: Säulenverankerung
- 14: Fühlstempel bzw. Verbindungsglied
- 15: Kupplung zwischen Fühlstempel und Belastungsstempel
- 16: Kupplungshülse bzw. Muffe des Belastungsstempels
- 17: Kupplungsstück
- 18: Nut
- 19: Fenster
- 20: Keil
- 21: Gleitfläche
- 22: Keilfläche des Keils
- 23: Gegenkeilfläche des Kupplungsstücks 17
- 24: Blattfeder
- 25: Außenkegel
- 26: Kegelsitz der Muffe 16
- 27: zylindrischer Schaft des Kupplungsstücks 17
- 28: Rohrschelle
- 29: schräg verlaufender Abschnitt der Blattfeder
- 30: Anschlag
- 31: Haltebügel
- 32: Rolle
- 33: Fenster
- 34: Kühlgerät
- 35: Kupplungsstück
- 36: Nut
- 37: Keilfläche
- 38: Keil
- 39: seitliche Führungsleiste
- 40: Betätigungsschieber
- 41: Dreh- bzw. Doppelexzenter
- 42: Schwenkgriff
- 43: Exzenterachse
- 44: Biegestabfedern
- 45: Synchronbetätigungsrahmen
- 46: Teller

- L: Längsachse Stempel
- LS: Längsachse Säule 12

## Patentansprüche

1. Materialanalysegerät (1) zur Analyse einer Werkstoffprobe, mit einer Probenkammer (5), mehreren Säulen (12), einem Erreger (2), einem Fühlstempel (14), und einem Probenhalter (11), der von mindestens einer der Säulen (12) getragen in die Probenkammer (5) hineinragt, sowie einem Belastungsstempel (3), der an seinem einen Ende von dem Erreger (2) mit Kraft beaufschlagt wird und an seinem anderen Ende den Fühlstempel (14) trägt, mit dem er in definierter Art und Weise Kraft auf die Probe (4) überträgt und diese dadurch belastet, wobei eine Probenkammerwand der Probenkammer (5) für mehrere Säulen (12) des Probenhalters (11) jeweils eine Halteöffnung aufweist, in die das freie Ende der jeweiligen Säule (12) eingeschoben werden kann, **dadurch gekennzeichnet, dass** das freie Ende der betreffenden Säule (12) eine Nut (36) trägt, in die ein beweglich in der Probenkammerwand gelagerter Keil (38) des Materialanalysegeräts (1) eingeschoben werden kann, sodass das Ende der Säule (12) formschlüssig spielfrei an der Probenkammerwand verankert ist.

2. Materialanalysegerät (1) nach dem vorhergehenden Anspruch, **dadurch gekennzeichnet, dass** die Probenkammer (5) temperierbar ist.

3. Materialanalysegerät (1) nach einem der vorherigen Ansprüche, **dadurch gekennzeichnet, dass** die Halteöffnung ganz oder teilweises als Sackloch ausgeführt ist, derart, dass der in der Probenkammerwand (6) gelagerte Keil (38) das freie Ende der ihm zugeordneten Säule (12) zwischen seiner Keilfläche (37) und dem Grund des Sacklochs verspannt.

4. Materialanalysegerät (1) nach einem der vorherigen Ansprüche, **dadurch gekennzeichnet, dass** die Probenkammer (5) von ihrer Oberseite her beladbar ist, dass sie einen Deckel (6) aufweist, durch den sie verschließbar ist, dass der Probenhalter mittels zwei oder mehr Säulen am Deckel aufgehängt ist und die Säulen den Probenhalter vom Deckel herab in die Probenkammer hineinragen lassen.

5. Materialanalysegerät (1) nach einem der vorherigen Ansprüche, **dadurch gekennzeichnet, dass** jede der Säulen (12) an ihrem freien Ende eine Nut (36) trägt, in die ein beweglich in der Probenkammerwand gelagerter Keil (38) eingeschoben werden kann, sodass das Ende der Säule (12) formschlüssig spielfrei an der Probenkammerwand verankert ist.

6. Materialanalysegerät (1) nach einem der vorherigen Ansprüche, **dadurch gekennzeichnet, dass** in der Probenkammerwand eine Synchronbetätigungsmimik integriert ist, die alle Keile (38) synchron betätigt, d. h. in die Nuten (36) der Säulen (12) einschiebt oder aus ihnen herauszieht.

7. Materialanalysegerät (1) nach Anspruch 6, **dadurch gekennzeichnet, dass** die Synchronbetätigungsmimik einen Drehexzenter (41) umfasst, der bei entsprechender Drehung eine Druckkraft auf mindestens einen Keil (38) ausübt, die diesen in eine Nut (36) einer Säule (12) zwängt, und gleichzeitig Zug auf einen Synchronbetätigungsrahmen (45) ausübt, der, wenn er hierdurch in eine andere Position gezogen wird, seinerseits eine Druckkraft auf mindestens einen zweiten Keil (38) ausübt, die diesen in eine Nut (36) einer anderen Säule (12) zwängt.

8. Materialanalysegerät (1) nach Anspruch 7, **dadurch gekennzeichnet, dass** die Keile (38) nicht unmittelbar, sondern über Federelemente, vorzugsweise in Gestalt von Biegestabfedern (44), mit dem Drehexzenter (41) und dem Synchronbetätigungsrahmen (45) kommunizieren.

9. Materialanalysegerät (1) nach Anspruch 7, **dadurch gekennzeichnet, dass** der Drehexzenter (41) in einem Teller des Deckels schwenkbar gelagert ist und mit Hilfe eines Schwenkgriffs (42) um eine Exzenterachse (43) gedreht werden kann.

10. Materialanalysegerät (1) nach einem der vorhergehenden Ansprüche **dadurch gekennzeichnet, dass** mindestens ein Bereich außerhalb der Probenkammer (5) zwischen Probenkammer (5) und dem Messsystem selbsttätig durch ein auf Wärmerohrtechnologie basierendes Kühlsystem gekühlt wird, indem mindestens ein Wärmerohr vorgesehen ist, das innen hohl und hermetisch abgedichtet ist und in dem selbsttätig ein Kühlfluid zirkuliert, wobei das wärmeaufnehmende Ende des Wärmerohrs wärmeleitend mit dem zu kühlenden Wandbereich verbunden ist und das wärmeabgebende Ende des Wärmerohrs mit einem Kühlkörper verbunden ist und/oder äußerlich mit Kühlmittel zwangsangeströmt wird.

## Claims

1. Material analysis device (1) for analyzing a material sample, comprising a sample chamber (5), multiple columns (12), an actuator (2), a sensing plunger (14), and a sample holder (11), which is supported by at least one of the columns (12) and extends into the sample chamber (5), as well as a loading plunger (3) that is acted upon with force by the actuator (2) at one end and carries the sensing plunger (14) at the other end, with which it applies force to the sample (4) in a defined manner and thereby loads it, whereby a sample chamber wall of the sample chamber (5) has a holding opening for each of several columns (12) of the sample holder (11), into which the free end of the respective column (12) can be pushed in,
**characterized in that** the free end of the respective column (12) carries a groove (36), into which a wedge (38), movably mounted in the sample chamber wall, can be inserted, so that the end of the column (12) is in a form fitting manner and free of play anchored to the sample chamber wall.

2. Material analysis device (1) according to the preceding claim, **characterized in that** the sample chamber (5) is temperable.

3. Material analysis device (1) according to any one of the preceding claims, **characterized in that** the holding opening is formed wholly or partially as a blind hole, such that the wedge (38), mounted in the sample chamber wall (6), clamps the free end of its associated column (12) between its wedge surface (37) and the bottom of the blind hole.

4. Material analysis device (1) according to any one of the preceding claims, **characterized in that** the sample chamber (5) can be loaded from the top, that it has a lid (6) by which it can be closed, that the sample holder is suspended by two or more columns from the lid, and the columns allow the sample holder to extend down from the lid into the sample chamber.

5. Material analysis device (1) according to any one of the preceding claims, **characterized in that** each of the columns (12) at its free end features a groove (36), into which a wedge (38), movably mounted in the sample chamber wall, can be pushed in, so that the end of the column (12) is in a form fitting manner and free of play anchored to the sample chamber wall.

6. Material analysis device (1) according to any one of the preceding claims, **characterized in that** a synchronization actuation mechanism is integrated into the sample chamber wall, which actuates all wedges (38) synchronously, i.e., pushes them into or withdraws them from the grooves (36) of the columns (12).

7. Material analysis device (1) according to claim 6, **characterized in that** the synchronization actuation mechanism comprises a rotary cam (41), which, when rotated accordingly, exerts a compressive force on at least one wedge (38) that presses it into a groove (36) of a column (12), and at the same time exerts tension to a synchronization actuation frame (45), which, when pulled into another position as a result, exerts a compressive force on at least one second wedge (38) that presses it into a groove (36) of another column (12).

8. Material analysis device (1) according to claim 7, **characterized in that** the wedges (38) do not communicate directly, but via spring elements, preferably in the form of flexural bar springs (44), with the rotary cam (41) and the synchronization actuation frame (45).

9. Material analysis device (1) according to claim 7, **characterized in that** the rotary cam (41) is pivotably mounted in a part of the lid and can be rotated around an eccentric axis (43) using a swivel handle (42).

10. Material analysis device (1) according to any one of the preceding claims, **characterized in that** at least one area outside the sample chamber (5), between the sample chamber (5) and the measurement system, is automatically cooled by a cooling system based on heat pipe technology, wherein at least one heat pipe is provided that is hollow and hermetically sealed and in which a cooling fluid circulates automatically, with the heat-absorbing end of the heat pipe being thermally conductively connected to the wall section to be cooled, and the heat-releasing end of the heat pipe being connected to a heat sink and/or externally impinged with cooling medium by forced flow.

## Revendications

1. Dispositif d'analyse de matériaux (1) pour l'analyse d'un échantillon de matériau, comportant une chambre d'échantillon (5), plusieurs colonnes (12), un excitateur (2), un poinçon de mesure (14) et un support d'échantillon (11), qui est supporté par au moins une des colonnes (12) et s'étend dans la chambre d'échantillon (5), ainsi qu'un poinçon de charge (3), qui est soumis à une force par l'excitateur (2) à une extrémité et porte le un poinçon de mesure (14) à son autre extrémité, avec laquelle il applique une force définie à l'échantillon (4) et le sollicite ainsi, dans lequel une paroi de chambre d'échantillon de la chambre d'échantillon (5) pour une pluralité de colonnes (12) du porte-échantillon (11) comporte chacune une ouverture de maintien dans laquelle l'extrémité libre de la colonne respective (12) peut être insérée,
**caractérisé en ce que** l'extrémité libre de la colonne (12) concernée comporte une rainure (36), dans laquelle peut être inséré un coin (38) monté de manière mobile dans la paroi de la chambre d'échantillon, de sorte que l'extrémité de la colonne (12) est ancrée de manière ajustée et sans jeu dans la paroi de la chambre d'échantillon.

2. Dispositif d'analyse de matériaux (1) selon la revendication précédente, **caractérisé en ce que** la chambre d'échantillon (5) est thermostatable.

3. Dispositif d'analyse de matériaux (1) selon l'une des revendications précédentes,
**caractérisé en ce que** l'ouverture de fixation est réalisée totalement ou partiellement sous forme d'un trou borgne, de telle manière que le coin (38), monté dans la paroi de la chambre d'échantillon (6), serre l'extrémité libre de la colonne (12) qui lui est associée entre sa surface en biseau (37) et le fond du trou borgne.

4. Dispositif d'analyse de matériaux (1) selon l'une des revendications précédentes,
**caractérisé en ce que** la chambre d'échantillon (5) peut être chargée par le dessus, qu'elle comporte un couvercle (6) permettant de la fermer, que le support d'échantillon est suspendu par deux colonnes ou plus au couvercle, et que les colonnes font saillir le support d'échantillon depuis le couvercle vers l'intérieur de la chambre.

5. Dispositif d'analyse de matériaux (1) selon l'une des revendications précédentes,
**caractérisé en ce que** chacune des colonnes (12) comporte à son extrémité libre une rainure (36), dans laquelle peut être inséré un coin (38) monté de manière mobile dans la paroi de la chambre d'échantillon, de sorte que l'extrémité de la colonne (12) est ancrée de manière ajustée et sans jeu dans la paroi de la chambre d'échantillon.

6. Dispositif d'analyse de matériaux (1) selon l'une des revendications précédentes,
**caractérisé en ce que** la paroi de la chambre d'échantillon intègre un mécanisme d'actionnement synchronisé, qui actionne tous les coins (38) de manière synchrone, c'est-à-dire qu'il les insère dans les rainures (36) des colonnes (12) ou les en retire.

7. Dispositif d'analyse de matériaux (1) selon la revendication 6, **caractérisé en ce que** le mécanisme d'actionnement synchronisé comprend un excentrique rotatif (41), qui, lorsqu'il est tourné, exerce une force de pression sur au moins un coin (38), l'enfonçant dans une rainure (36) d'une colonne (12), tout en exerçant une traction sur un cadre d'actionnement synchronisé (45) qui, lorsqu'il est tiré dans une autre position, exerce à son tour une force de pression sur au moins un second coin (38), l'enfonçant dans une rainure (36) d'une autre colonne (12).

8. Dispositif d'analyse de matériaux (1) selon la revendication 7, **caractérisé en ce que** les coins (38) ne sont pas en contact direct, mais communiquent avec l'excentrique rotatif (41) et le cadre d'actionnement synchronisé (45) par l'intermédiaire d'éléments ressorts, de préférence sous forme de ressorts à lame (44).

9. Dispositif d'analyse de matériaux (1) selon la revendication 7, **caractérisé en ce que** l'excentrique rotatif (41) est monté pivotant dans une partie du couvercle et peut être tourné autour d'un axe excentrique (43) à l'aide d'une poignée pivotante (42).

10. Dispositif d'analyse de matériaux (1) selon l'une des revendications précédentes,
**caractérisé en ce que** au moins une zone située à l'extérieur de la chambre d'échantillon (5), entre la chambre d'échantillon (5) et le système de mesure, est refroidie automatiquement par un système de refroidissement basé sur la technologie de caloducs, dans lequel au moins un caloduc est prévu, creux à l'intérieur et hermétiquement scellé, et dans lequel un fluide de refroidissement circule automatiquement, l'extrémité absorbant la chaleur du caloduc étant en contact thermique avec la zone de paroi à refroidir, et l'extrémité dissipant la chaleur étant connectée à un dissipateur thermique et/ou exposée à un flux forcé de fluide de refroidissement.
